# EUROPÄISCHE PATENTSCHRIFT

(11) **EP 1 619 106 B1**
(45) Veröffentlichungstag und Bekanntmachung des Hinweises auf die Patenterteilung: **03.09.2008**
(21) Anmeldenummer: 05015184.4
(22) Anmeldetag: 13.07.2005
(51) Int. Cl.: B62D 21/00, B62D 25/00, B62D 25/16

(54) **Universalhalter zur Befestigung von Fahrzeugteilen an einem Fahrgestellrahmen eines Lastkraftwagens**
Universal mounting bracket to attach vehicle components to the chassis of a heavy goods vehicle
Support universel pour le montage d'un composant de véhicule sur le châssis d'un véhicule poids lourd

(30) Priorität: 24.07.2004 DE 102004036097
(43) Veröffentlichungstag der Anmeldung: 25.01.2006
(73) Patentinhaber: MAN Nutzfahrzeuge Aktiengesellschaft, 80995 München (DE)
(72) Erfinder: Best, Dieter, 85298 Scheyern (DE); Just, Robert, 85256 Vierkirchen (DE); Weissbrodt, Olaf, Dipl.-Ing., 80995 München (DE)

(56) Entgegenhaltungen:
- EP-A- 1 172 283
- EP-A1- 1 043 216
- US-A- 3 782 757
- US-A- 4 165 092
- US-A- 4 359 232
- US-A- 4 712 805
- US-A1- 2002 020 794
- US-A1- 2004 140 663
- US-B1- 6 367 841

## Beschreibung

Die vorliegende Erfindung betrifft einen Universalhalter, insbesondere zur Befestigung unterschiedlicher Fahrzeugteile am Fahrgestellrahmen eines Lastkraftwagens.

Beim Bau von Lastkraftwagen werden nach dem Stand der Technik unterschiedlichste Bauteile am Fahrgestellrahmen befestigt, die im Folgenden auch als Fahrzeugteile bezeichnet werden. Zu diesen Fahrzeugteilen zählen beispielsweise Schlussleuchten, Typen- oder Firmenschilder, Seitenverkleidungen, Designelemente, Unterfahrschutzblenden, Druckluftbehälter, Kotflügel etc.

Bisher ist es für Lkw bekannt, die einzelnen Fahrzeugteile über individuelle Haltervorrichtungen am Fahrgestellrahmen zu befestigen. So werden beispielsweise die Kotflügel eines Lkw über speziell dafür ausgelegte Halterungen mit dem Fahrgestellrahmen verbunden, während etwa eine Schlussleuchte oder ein Seitenunterfahrschutz eine wiederum speziell für das jeweilige Element ausgebildete Halterung zur Montage an dem Fahrgestellrahmen aufweist.

Die Vielzahl der unterschiedlichen Halterungen verursacht neben der insgesamt aufwändigen Herstellung auch zusätzlichen Aufwand in der Bereitstellung von Ersatzteilen, was sich letztendlich negativ auf die Kosten niederschlägt.

Aufgabe der Erfindung ist es daher, Halterungen, insbesondere für die Befestigung von Fahrzeugteilen am Fahrgestellrahmen eines Lastkraftwagens zu schaffen, welche eine vereinfachte Herstellung und Lagerhaltung ermöglichen und damit Kosten einsparen.

Die Aufgabe wird durch einen Universalhalter mit den Merkmalen des Anspruchs 1 sowie dessen Anwendung an einem LkW nach den Ansprüchen 11 und 12 gelöst. (US 2004/0140663 offenbart einen Universalhalter gemäß dem Oberbegriff des Anspruchs 1.)

Die Erfindung geht von der Erkenntnis aus, dass durch Standardisierung einer Anzahl bisher unterschiedlicher Halterungen ein einheitlicher, aber universell einsetzbarer Universalhalter geschaffen werden kann, der für nahezu jedes an einem Fahrgestellrahmen anzubringende Fahrzeugteil einsetzbar ist. Durch eine überlegte und allen individuellen Montageerfordernissen zugrunde gelegte Gestaltung des Universalhalters wird damit vorteilhaft die Bereitstellung unterschiedlichster Halter sowie deren kostspielige Herstellung und Lagerung vermieden.

Ein solcher Universalhalter ist erfindungsgemäß auch für Aufbaurahmen verwendbar, die ihrerseits an einem Fahrgestellrahmen befestigt sind.

In einer Ausführungsform weist der Universalhalter einen Anschlussbock auf, mit welchem er an seiner bestimmungsgemäßen Stelle, insbesondere an einem Fahrgestellrahmen zu befestigen ist. An diesem Anschlussbock ist wenigstens ein Arm angeordnet, an welchem wiederum ein Fahrzeugteil unmittelbar oder mittelbar montierbar ist.

Ein derartiger Universalhalter lässt sich an nahezu beliebiger Stelle z. B. entlang des Lkw-Fahrgestellrahmens über seinen Anschlussbock montieren. Der sich vom Anschlussbock weg erstreckende Arm erlaubt dann die jeweilige Montage wenigstens eines Fahrzeugteils, und zwar unabhängig von dessen jeweiliger Art und Gestaltung. In Einzelfällen kann für die Anpassung des stets gleichartig ausgebildeten Universalhalter-Arms an die jeweils individuelle Anbaukomponente ein einfach zu fertigendes und kostengünstiges Verbindungsteil vorgesehen sein, welches die Verbindung des Fahrzeugteils zum Arm des Universalhalters herstellt. Eine für jedes Fahrzeugteil individuell erforderliche Befestigungsvorrichtung am Lkw-Fahrgestellrahmen ist daher vorteilhaft überflüssig und spart Herstellungs- und Lagerhaltungskosten.

In einer vorteilhaften Ausführungsform der Erfindung weist der Anschlussbock auf seiner für Befestigung vorgesehenen Seite eine erste Lochmaske auf, die zu einer an der vorgesehenen Befestigungsstelle, z. B. im Fahrgestellrahmen ausgebildeten zweiten Lochmaske komplementär ausgebildet ist. Durch die derart zueinander passend ausgebildeten Masken (Bohrungsanordnungen) wird die Montage des Universalhalters über seinen Anschlussbock z. B. am Fahrgestellrahmen des Lkw vorteilhaft vereinfacht. Der Anschlussbock kann, z. B. ohne weitere Bohrungen vorzunehmen, an jeder mit dem Bohrungsmuster des Fahrgestellrahmens übereinstimmenden Stelle angeschraubt werden. Die Anordnung und Anzahl der Bohrungen am Anschlussbock bzw. am Fahrgestellrahmen ist dabei so gewählt, dass hinsichtlich Stabilität der mit der Lochmaske versehenen Teile (Fahrgestellrahmen, Anschlussbock) einerseits und Festigkeit der Schraubverbindung zwischen den beiden Teilen andererseits ein Optimum erzielt wird. Einer Schwächung der Steifigkeit bzw. der Materialfestigkeit des Anschlussbocks mit zunehmender Anzahl der Bohrungen steht die Flexibilität der Verschraubungsmöglichkeiten mit dem Fahrgestellrahmen gegenüber. Entsprechend können schwächer zu belastende (Schraub-)Verbindungen zwischen Fahrgestellrahmen und Anschlussbock durch eine geringere Anzahl von eingesetzten Schrauben hergestellt werden, während andererseits das Maximum der Bohrungen für eine höher belastete Verbindung genutzt werden kann.

Eine weitere vorteilhafte Ausführungsform der Erfindung sieht vor, dass auch der Arm des Universalhalters auf wenigstens einer Seite ein Universallochbild zur Montage unterschiedlicher Fahrzeugteile am Arm aufweist. Analog zur vorher beschriebenen Lochmaske am Fahrgestellrahmen bzw. Anschlussbock ergibt sich hier wieder die vorteilhafte Standardisierung zur Nutzung immer gleicher Lochbilder für verschiedene Montagezwecke. Die am Arm des Universalhalters unmittelbar oder mittelbar zu befestigenden Fahrzeugteile können dabei ihre individuellen Befestigungsausbildungen alle beibehalten und dabei doch alle an dem selben Universalhalter befestigt werden.

Der Arm des Universalhalters, der im Wesentlichen längliche Gestalt hat, kann mehrere Seiten aufweisen, an denen die Montage eines oder auch mehrerer Fahrzeugteile möglich ist. Für diesen Fall kann jede Seite ein bestimmtes Lochbild aufweisen, welches sich mit denen der anderen Seiten des Arms decken oder auch verschieden davon sein kann.

Besonders vorteilhaft, weil einfach herstellbar, ist der Universalhalter dann, wenn der Arm und/oder der Anschlussbock als Blechbiegeteil oder als Blechpressteil ausgeführt ist. Derartige Teile sind besonders einfach und in großen Stückzahlen kostengünstig herzustellen. Selbstverständlich ist jedoch auch eine z. B. durch Schmieden, Fräsen, Gießen oder andere Vorgänge herzustellende Form des Universalhalters denkbar. Nach der Erfindung sind Anschlussbock und Arm miteinander verschweißt. Auf diese Weise lässt sich kostengünstig, schnell und einfach eine stabile Verbindung herstellen, die alternativ und je nach Festigkeitsanforderungen auch durch andere Fügeverfahren ersetzt werden kann.

Eine besonders vorteilhafte Ausführungsform der Erfindung sieht vor, dass der Arm des Universalhalters sich im Wesentlichen senkrecht zu einer am Fahrgestellrahmen anliegenden Seite des Anschlussbocks erstreckt. Eine solch einfache Geometrie erleichtert die Konstruktion und auch den Einsatz des Universalhalters und erfasst vorteilhaft alle wesentlichen Einsatzgebiete. Im montierten Zustand des Universalhalters liegt dieser über eine dem Fahrgestellrahmen zugewandte Fläche oder Seite an dem Fahrgestellrahmen des Lkw an. Üblicherweise ist dieser Bereich des Fahrgestellrahmens im Wesentlichen als senkrechte Fläche ausgebildet, die mit den Bohrungen der vorbeschriebenen Lochmaske durchsetzt ist. Durch die vorbeschriebene Anordnung des zugehörigen Arms ergibt sich, dass dieser im montierten Zustand im Wesentlichen waagerecht von der Fläche abragt. Die Fahrzeugteile für den Fahrgestellrahmen lassen sich so auf einfache Weise um den Fahrgestellrahmen herum am Universalhalter anbringen. Selbstverständlich ist grundsätzlich auch ein anderer als ein rechter Winkel zwischen der am Arm anliegenden Seite des Anschlussbocks und dem sich vom Anschlussbock weg erstreckenden Arm denkbar.

Erfindungsgemäß ist der Universalhalter so ausgeführt, dass der Arm in seiner Längsrichtung im Wesentlichen ein U-Profil aufweist. Auf diese Weise kann bei geringem Materialeinsatz eine besonders gute Stabilität des Arms erreicht werden. Weiterhin erlaubt ein derartiges Profil die Befestigung von Fahrzeugteilen auf den beiden Schenkeln des U's sowie auf dem die beiden Schenkel verbindenden Mittelsteg, also an insgesamt drei Seiten. Jede Seite kann dabei ein individuelles Lochbild aufweisen, dieses kann jedoch auch auf allen drei Seiten gleich ausgebildet sein. Abhängig von der aufzunehmenden Last können die Schenkel des U-Profils vom Anschlussbock an in Richtung des freien Endes des Arms von abnehmender vertikaler oder auch horizontaler Ausdehnung sein, um ein Optimum zwischen möglicher Biegelastaufnahme und Materialaufwand zu erreichen.

In einer anderen vorteilhaften Ausführungsform der Erfindung ist das U-Profil so angeordnet, dass der die beiden Schenkel verbindende Mittelsteg im montierten Zustand im wesentlichen senkrecht angeordnet ist, so dass eine vertikal von oben auf den Arm ausgeübte Tragkraft im wesentlichen in der durch den Mittelsteg ausgebildeten Ebene (Boden) des U-Profils verläuft. In dem durch den Mittelsteg gebildeten "Boden" des U-Profils, der durch die beiden Schenkel besonders stabil eingefasst ist, werden bei der vorgenannten Belastung in senkrechter Richtung die Schubspannungen besonders sicher und stabil aufgenommen, die bei einer Biegebelastung des Arms in der Bodenfläche entstehen.

Eine weitere vorteilhafte Ausführungsform der Erfindung sieht vor, dass Anschlussbock und Arm auf wenigstens einer Seite des Universalhalters gemeinsam eine ebene Anschlagfläche bilden. Das bedeutet, dass Anschlagbock und Arm sich auf wenigstens einer Seite des Universalhalters in ihren äußeren Abmessungen entlang einer gemeinsamen Ebene erstrecken. Der Vorteil einer solchen gemeinsamen Anschlagfläche liegt darin, dass Fahrzeugteile oder auch hilfsweise am Universalhalter anzubringende Befestigungselemente über die gesamte Länge des Universalhalters formschlüssig an diesem anliegen können. Somit kann insbesondere auch der Anschlussbock eine Kraft aufnehmen, die in seinem Teil der Anschlagfläche senkrecht darauf einwirkt. Dadurch wird der Arm des Universalhalters hinsichtlich solcher Anschlagkräfte wenigstens teilweise entlastet. Darüber hinaus ergibt sich durch die Anschlagfläche der Vorteil einer einfachen und genauen Justierung eines am Universalhalter anzubringenden Fahrzeugteils.

In Verbindung mit der vorgenannten Ausführungsform ergibt sich eine weitere vorteilhafte Ausführungsform dann, wenn die Anschlagfläche des Arms durch den Boden eines U-Profils gebildet wird. In diesem Fall ist die Anschlagfläche im Bereich des Arms durchgehend und stabil ausgebildet. Wie in einer späteren Figurenbeschreibung noch zu sehen sein wird, kann ein solchermaßen ausgebildeter Arm gekröpft geformt sein. Dabei erstreckt sich der Arm zunächst zwischen zwei zum Anschlussbock gehörenden und den Arm haltenden Schenkeln hindurch, um sich dann anschließend um das Maß der Wandstärke eines solchen Schenkels seitlich zu erweitern, so dass ein Schenkel des Anschlussbocks mit dem daran anschließenden Arm die vorgenannte gemeinsame Anschlagfläche bilden. Arm und Anschlussbock sind miteinander verschweißt.

Erfindungsgemäß lässt sich der Anschlussbock des Universalhalters in wenigstens zwei verschiedenen Ausrichtungen am Fahrgestellrahmen des Lkw befestigen. Erstreckt sich beim erfindungsgemäßen Universalhalter der Arm oberhalb einer im montierten Zustand durch den Universalhalter gedachten waagerechten Mittelebene vom Fahrgestellrahmen weg, so ist durch die analoge Montage "kopfüber" der Universalhalter so angeordnet, dass sich der Arm entsprechend unterhalb der vorgenannten Ebene vom Fahrgestellrahmen weg erstreckt. Bei einer geeigneten Lochmaskenausbildung im Anschlussbock bzw. im Fahrgestellrahmen lässt sich statt der vorgenannten, um 180° verdrehten Anordnung auch eine Montage um 90° oder 270° oder jedes andere, von der Lochmaske zugelassene Maß, erzielen. Dies erhöht vorteilhaft die Flexibilität bei den unterschiedlichen Montageanforderungen.

Die Anordnung des Arms relativ zum Anschlussbock kann ebenfalls frei gewählt sein, so dass der den Boden des U-Profils bildende Mittelsteg die Oberseite, Unterseite, rechte oder linke Seite des Arms im montierten Zustand darstellen kann.

Ein erfindungsgemäßer Lkw weist wenigstens einen Universalhalter der vorbeschriebenen Art auf, über den die vorgenannten Fahrzeugteile am Fahrgestellrahmen des Lkws befestigt sind. Hierbei ist der Arm als zur Seite hin offene, im Querschnitt U-förmige Halbschale ausgebildet und der von den Schenkeln eingeschlossene Boden des Arms ist im montierten Zustand des Universalhalters im Wesentlichen vertikal ausgerichtet.

Der Universalhalter kann aus Metall, Kunststoff, glasfaserverstärktem Kunststoff, Verbundwerkstoff oder sonstigem Material hergestellt sein.

Weitere vorteilhafte Ausführungsformen ergeben sich aus den Unteransprüchen.

Nachstehend soll die Erfindung in Ausführungsbeispielen anhand von Figurendarstellungen erläutert werden. Von den Figuren zeigt
Fig. 1 einen erfindungsgemäßen Universalhalter in perspektivischer Ansicht;
Fig. 2 den Universalhalter nach Fig. 1 in einer Seitenund Frontansicht;
Fig. 3 den vorgenannten Universalhalter in einer Draufsicht;
Fig. 4 einen Lkw mit mehreren erfindungsgemäßen Universalhaltern;
Fig. 5 eine beispielhafte Anwendung des Universalhalters für einen Hinterradkotflügel in mehreren Ansichten;
Fig. 6 die Anwendung zweier Universalhalter für die Aufnahme eines Druckluftbehälters in mehreren Ansichten;
Fig. 7 die Anwendung eines Universalhalters für eine Unterfahrschutzplatte;
Fig. 8 eine weitere Anwendung eines Universalhalters für einen Unterfahrschutz und
Fig. 9 die gemeinsame Nutzung eines Universalhalters für mehrere Fahrzeugteile.

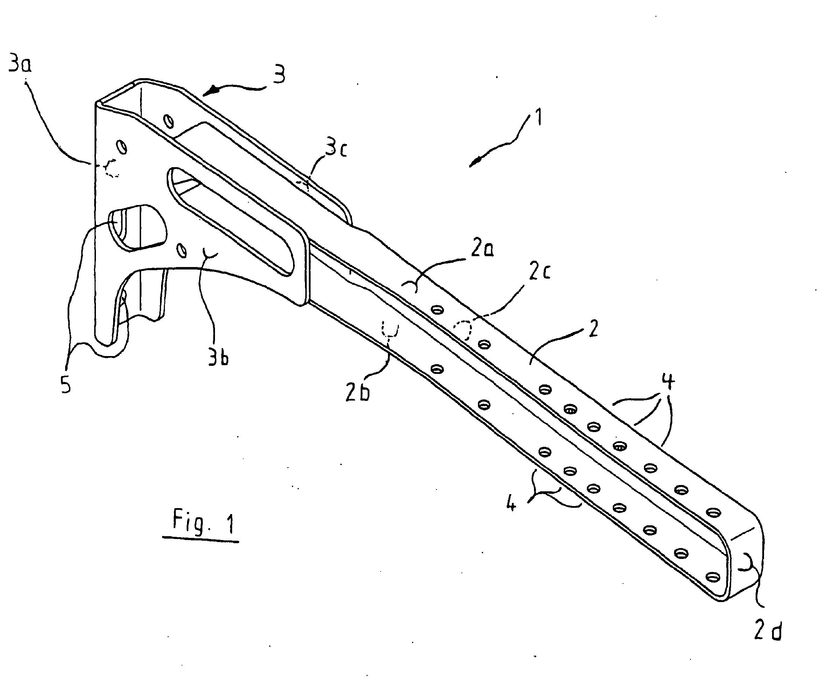

Ein in Fig. 1 bis Fig. 3 in Einzelheit ersichtlicher Universalhalter 1 weist einen Anschlussbock 3 und einen Arm 2 auf, der sich im Wesentlichen seitlich abragend vom Anschlussbock 3 weg erstreckt.

Der Anschlussbock 3 weist im dargestellten Beispiel einen von oben gesehen U-förmigen Querschnitt mit einem Quersteg 3a und den beiden daran abgewinkelten, parallel zueinander verlaufenden Seitenwangen 3b, 3c auf. Zwischen Letzteren ist der Arm 2 mit seinem inneren Endbereich aufgenommen. Der dem Arm 2 gegenüberliegende Quersteg 3a des Anschlussbocks 3 liegt beim dargestellten Anwendungsfall einem Längsträger eines Fahrgestellrahmens eines Lkw an.

Der Anschlussbock 3 weist im Quersteg 3a eine Lochmaske 5 auf, die komplementär zu einer an der vorgesehenen Befestigungsstelle, z. B. einem Längsträger des Fahrgestellrahmens, ausgebildeten Lochmaske ist.

Der Arm 2 ist als zur Seite und nach innen offene, im Querschnitt U-förmige Halbschale ausgebildet, mit einem oberen Schenkel 2a, einem unteren Schenkel 2b, einem Quersteg 2c und einem Außensteg 2d.

In beiden Schenkeln 2a, 2b ist ein Lochbild 4 ausgebildet, welches zur variablen Montage von Fahrzeugteilen verwendbar ist.

Anschlussbock 3 und Arm 2 sind miteinander verschweißt.

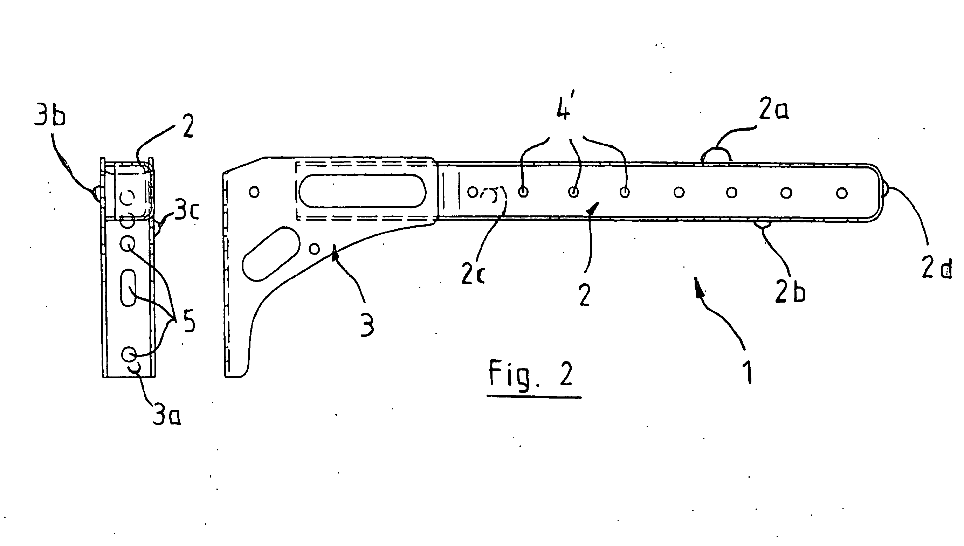

In Fig. 2 ist der Universalhalter 1 nach Fig. 1 in einer Seiten- und einer Vorderansicht dargestellt. Die Seitenansicht im rechten Teil der Fig. 2 zeigt den Anschlussbock 3 und den Arm 2 des Universalhalters 1 und macht deutlich, dass im Boden 2c des U-Profils des Arms 2 ein weiteres Lochbild 4' ausgebildet ist. Das Lochbild 4' kann dem Lochbild 4 entsprechen oder davon verschieden ausgebildet sein. Der dargestellte Arm 2 des Universalhalters 1 ist also auf drei Seiten mit Bohrungen versehen, um den Anbau von Fahrzeugteilen zu ermöglichen. Anstelle von Bohrungen können auch Langlöcher oder sonstige geformte Ausnehmungen vorgesehen sein.

In der Vorderansicht des Universalhalters 1 im linken Teil der Fig. 2 ist die Halbschalenform des Arms 2 sowie die Lochmaske 5 im Anschlussbock 3 gut zu erkennen.

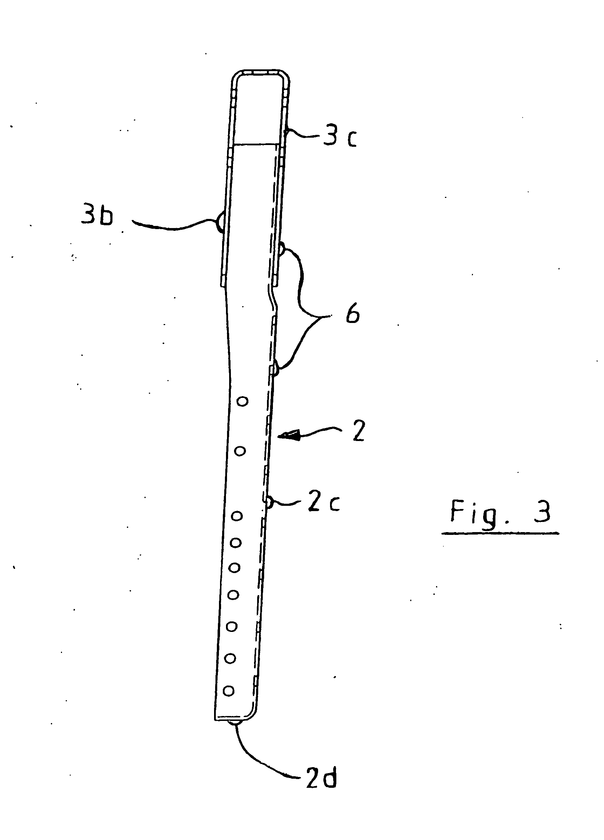

In der Draufsicht auf den erfindungsgemäßen Universalhalter 1 nach Fig. 3 ist zu erkennen, dass der Boden 2c des Arms 2 mit dem Abschnitt 3c des Anschlussbocks 3 eine gemeinsame ebene Anschlagfläche 6 bildet, wozu der Arm 2 außerhalb des Anschlussbocks 3 um ein entsprechendes Maß seitlich ausgelenkt ist. Auf dieser Seitenfläche 6 kann also über die ganze Länge des Universalhalters 1 ein Fahrzeugteil oder ein Montagehilfsteil formschlüssig anliegen.

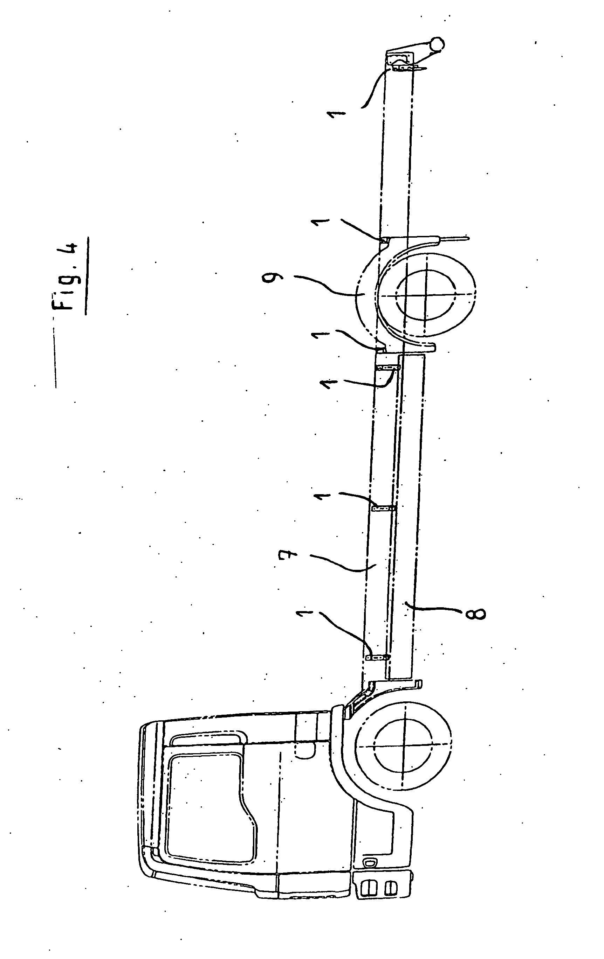

Fig. 4 zeigt schematisch einen Lkw, der entlang seines Fahrgestellrahmens 7 mehrere erfindungsgemäße Universalhalter 1 aufweist. Zu erkennen ist dabei, dass die Universalhalter 1 so montiert sind, dass sich der Arm 2 entweder im oberen oder im unteren Bereich des Universalhalters 1 vom Fahrgestellrahmen weg (aus der Zeichenebene heraus) erstreckt. Ein seitlicher Unterfahrschutz 8 ist dabei unter Verwendung mehrerer erfindungsgemäßer Universalhalter 1 am Fahrgestellrahmen befestigt. Zwei weitere Universalhalter sind zur Montage jeweils eines Hinterradkotflügels 9 vorgesehen.

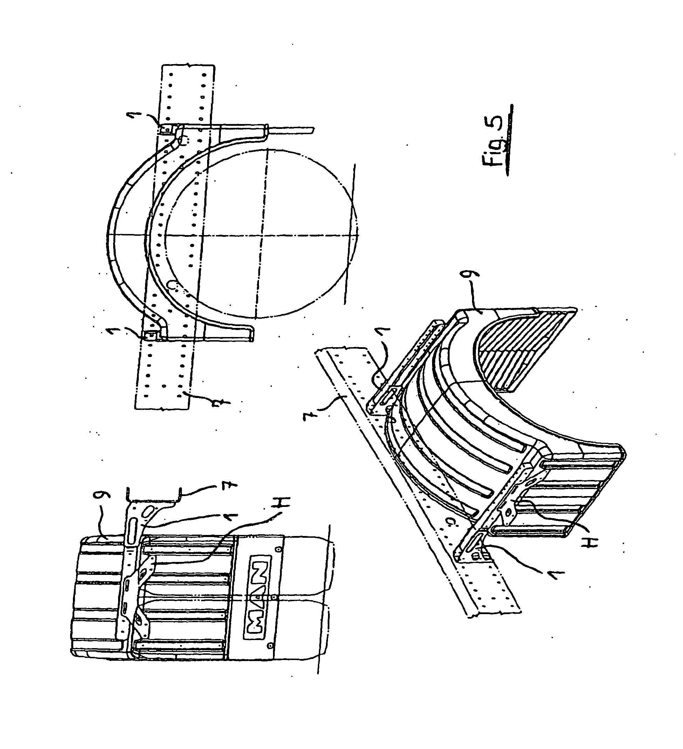

Fig. 5 zeigt detaillierter die Befestigung eines Hinterradkotflügels 9 in verschiedenen Ansichten. In allen drei Ansichten ist der Fahrgestellrahmen 7 des Lkw dargestellt, von dem sich zwei Universalhalter 1 im wesentlichen waagerecht wegstrecken. Die Universalhalter 1 sind dabei so am Fahrgestellrahmen 7 montiert, dass der Arm 2 sich im Wesentlichen im oberen Bereich des Fahrgestellrahmens 7 von diesem weg erstreckt.

Durch Hilfselemente H ist der Kotflügel 9 dann mit den Universalhaltern 1 verbunden, so dass der Kotflügel 9 über die beiden Universalhalter 1 stabil mit dem Fahrgestellrahmen 7 des Lkw verbunden ist.

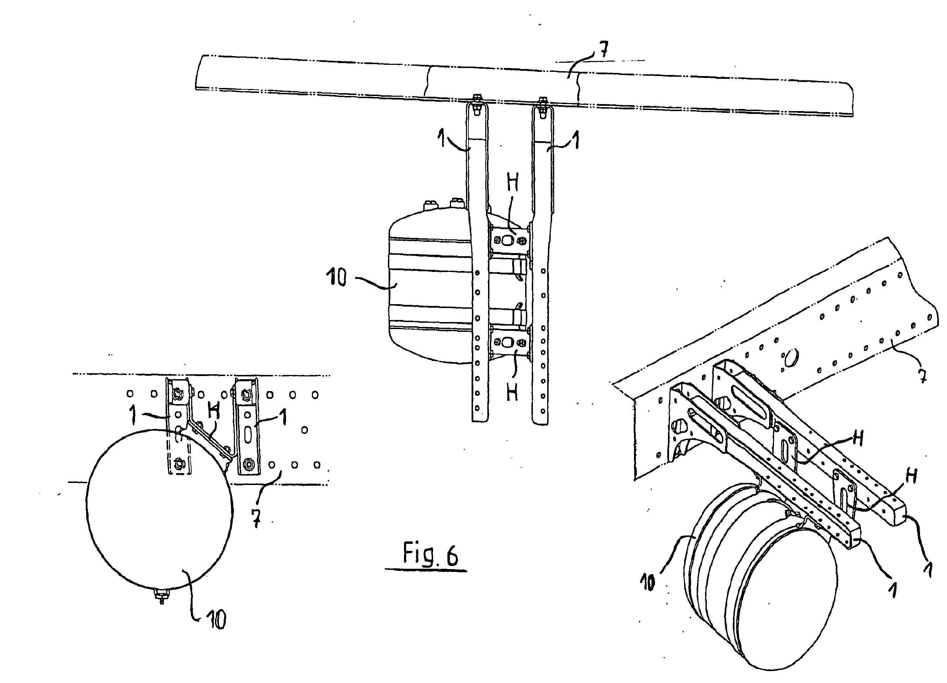

Fig. 6 zeigt in verschiedenen Ansichten einen weiteren Anwendungsfall für den erfindungsgemäßen Universalhalter 1. Dabei ist ein Druckluftbehälter 10 über zwei Universalhalter 1 mit dem Fahrgestellrahmen 7 des Lkw verbunden. Über ein oder zwei an beiden Universalhaltern 1 befestigte Verbindungshilfsteile H wird die Verbindung zum daran befestigten Druckluftbehälter 10 hergestellt.

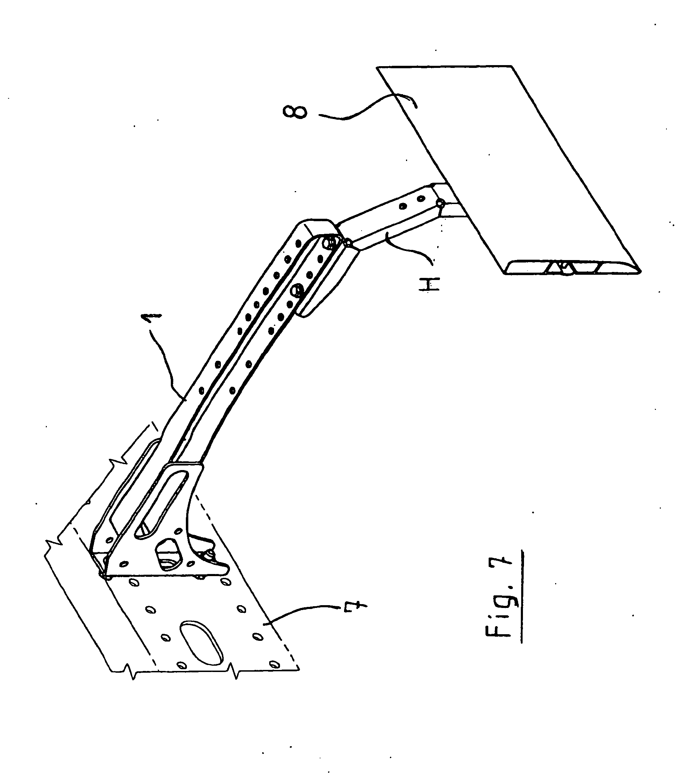

Fig. 7 zeigt die Befestigung eines seitlichen Unterfahrschutzes (Platte oder Leiste), die über ein Verbindungshilfsteil H an der Unterseite eines Universalhalters 1 befestigt ist, welcher wiederum am Fahrgestellrahmen 7 befestigt ist.

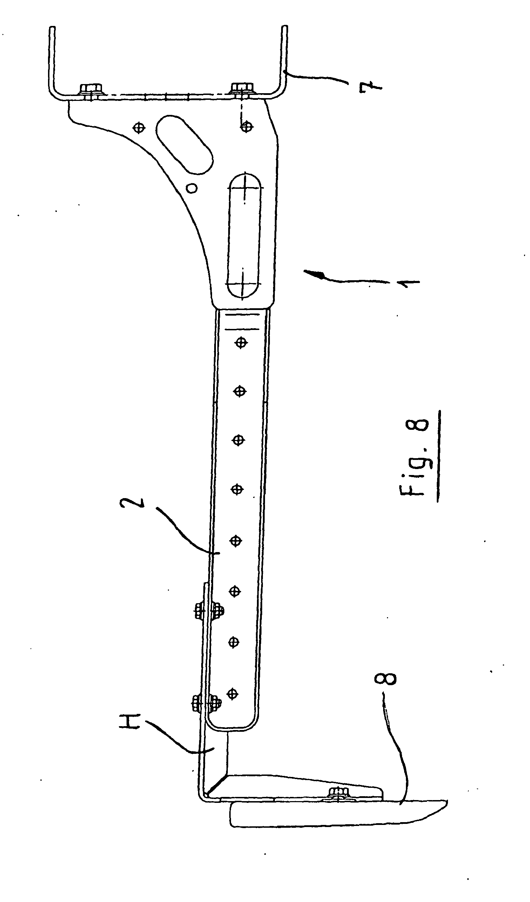

Fig. 8 zeigt in Seitenansicht einen ähnlichen Anwendungsfall, wobei hier das Hilfsteil H zur Aufnahme des Unterfahrschutzes 8 eine im Wesentlichen rechtwinklige Form hat und diesmal auf der Oberseite 2a des Arms 2 am Universalhalter 1 angeschlossen ist.

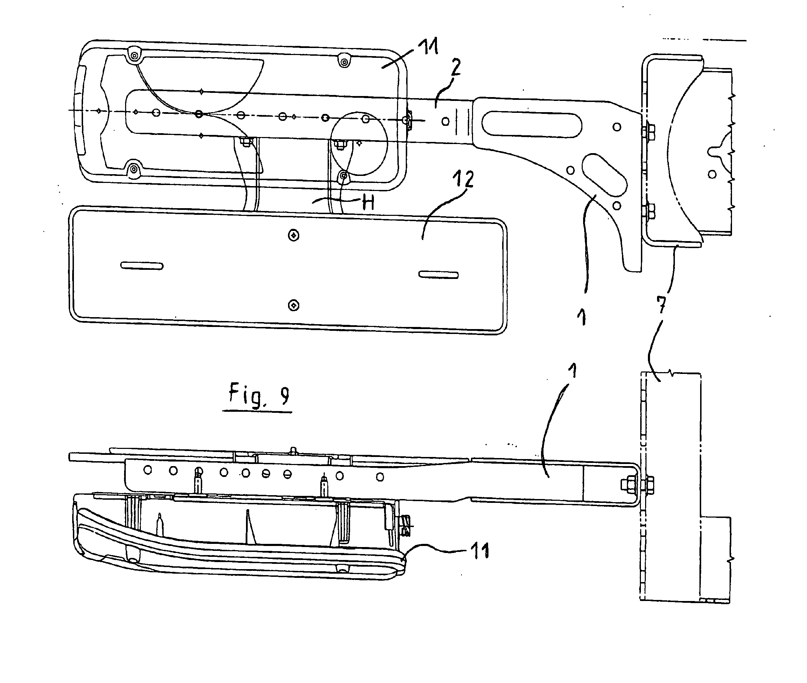

Fig. 9 zeigt in zwei Ansichten die Verwendung eines Universalhalters 1 zur gleichzeitigen Befestigung mehrerer Fahrzeugteile. Vom in Fig. 9 rechts dargestellten Fahrgestellrahmen 7 des Lkw ragt der Universalhalter 1 im wesentlichen horizontal seitlich ab, wobei an der parallel zur Zeichenoberfläche liegenden Seitenfläche 2c des Arms 2 eine Mehrkammerschlussleuchte 11 direkt befestigt ist. An der Unterseite 2b des gleichen Arms 2 ist darüber hinaus über ein Hilfsteil H eine Kennzeichen- [Namen-, Beschriftungs-] platte 12 befestigt.

Aus den vorgenannten und in der Zeichnung dargestellten Beispielen wird die universelle Einsatzfähigkeit des erfindungsgemäßen Universalhalters für die Befestigung unterschiedlichster Anbauteile am Rahmen eines Lastkraftwagens ersichtlich. Die dargestellten Beispiele sollen jedoch die Anwendung des Universalhalters nicht auf diese beschränken. Ebenso wären über diese weitere Fahrzeugteile wie z. B. weitere Betriebsstoffbehälter, Batteriekasten, Unterlegkeile, Ersatzrad, Luftfilter, Hydraulik-, Pneumatik-, Elektrikkomponenten etc. am Rahmen zu haltern.

## Patentansprüche

1. Universalhalter (1), zur Befestigung unterschiedlicher Fahrzeugteile am Fahrgestellrahmen eines Lastkraftwagens,
mit einem Anschlussbock (3) zur Befestigung des Universalhalters (1) an seiner bestimmungsgemäßen Stelle, insbesondere am Fahrgestellrahmen (7) eines Lastkraftwagens, und
mit wenigstens einem am Anschlussbock (3) angeordneten Arm (2) zur mittelbaren oder unmittelbaren Befestigung wenigstens eines Fahrzeugteils (8, 9, 10, 12, 13) daran, **dadurch gekennzeichnet, daß** der Arm (2) als zur Seite hin offene, im Querschnitt U-förmige Halbschale ausgebildet ist und der von den Schenkeln (2a, 2b) eingeschlossene Boden (2c) des Arms (2) im montierten Zustand des Universalhalters (1) im Wesentlichen vertikal ausgerichtet ist und Arm (2) und Anschlussbock (3) miteinander verschweißt sind.

2. Universalhalter nach Anspruch 1, **dadurch gekennzeichnet, dass** der Anschlussbock (3) in seiner der Befestigungsstelle, insbesondere dem Fahrgestellrahmen (7) zugewandten Seite (3a) eine erste Lochmaske aufweist die zu einer an der vorgesehenen Befestigungsstelle, insbesondere im Fahrgestellrahmen (7) ausgebildeten zweiten Lochmaske komplementär ausgebildet ist.

3. Universalhalter nach einem der vorigen Ansprüche, **dadurch gekennzeichnet, dass** er an seinem Arm (2) auf wenigstens einer Seite ein Universallochbild zur Montage unterschiedlicher Fahrzeugteile aufweist.

4. Universalhalter nach einem der vorigen Ansprüche, **dadurch gekennzeichnet, dass** der Arm (2) und/oder der Anschlussbock (3) durch ein Blechbiegeteil oder ein Blechpressteil realisiert ist.

5. Universalhalter nach einem der vorigen Ansprüche, **dadurch gekennzeichnet, dass** der Arm (2) sich im Wesentlichen senkrecht zu einer an der bestimmungsgemäßen Anschlussstelle, z. B. Fahrgestellrahmen (7) anliegenden Seite (3a) des Anschlussbocks (3) erstreckt.

6. Universalhalter nach einem der vorigen Ansprüche, **dadurch gekennzeichnet, dass** Anschlussbock (3) und Arm (2) auf wenigstens einer Seite des Universalhalters gemeinsam eine ebene Anschlagfläche (2c, 3c) bilden.

7. Universalhalter nach Anspruch 8, **dadurch gekennzeichnet, dass** die Anschlagfläche des Arms(2) durch dessen Boden (2c) gebildet wird.

8. Lastkraftwagen mit mehreren Universalhaltern (1) mit Merkmalen nach einem der vorherigen Ansprüche zur Halterung verschiedenster Fahrzeugteile am Fahrgestellrahmen, wobei die mehreren Universalhalter (1) jeweils wenigstens einen Arm (2) aufweisen, der als zur Seite hin offene, im Querschnitt U-förmige Halbschale ausgebildet ist und ein von den Schenkeln (2a, 2b) eingeschlossener Boden (2c) des wenigstens einen Arms (2) im montierten Zustand des Universalhalters (1) im Wesentlichen vertikal ausgerichtet ist.

9. Lastkraftwagen, an dessen Fahrgestellrahmen über Halter die verschiedensten Fahrzeugteile befestigt sind, wobei als Halter ein Universalhalter (1) vorgesehen ist, der einen Anschlussbock (3) zur Befestigung am Fahrgestellrahmen (7) und einen am Anschlussbock (3) angeordneten Arm (2) aufweist, an dem unmittelbar oder mittelbar die verschiedensten Fahrzeugteile wie Kotflügel, Radabdeckungen, Druckluft- oder andere Betriebsmittelbehälter, Seitenverkleidungen, seitliche Unterfahrschutzleisten, Batteriekasten, Schluss- oder sonstige Leuchten, Kennzeichen- oder Namenschilderplatten, Luftfilter, Pumpen, Hydraulik-, Pneumatik-, Elektrikkomponenten, Unterlegkeile, Ersatzrad etc. befestigbar sind, **dadurch gekennzeichnet, daß** der Arm (2) als zur Seite hin offene, im Querschnitt U-förmige Halbschale ausgebildet ist und der von den Schenkeln (2a, 2b) eingeschlossene Boden (2c) des Arms (2) im montierten Zustand des Universalhalters (1) im Wesentlichen vertikal ausgerichtet ist und Arm (2) und Anschlussbock (3) miteinander verschweißt sind.

## Claims

1. Universal mounting bracket (1) for the fastening of different vehicle components to the chassis frame of a truck, with a connecting rack (3) for fastening the universal mounting bracket (1) in its intended position, in particular on the chassis frame (7) of a truck, and with at least one arm (2) located at the connecting rack (3), for the direct or indirect fastening of at least one vehicle part (8, 9, 10, 12, 13), **characterised in that** the arm (2) takes the form of a half-shell of U-shaped cross-section open to the side, whereby the base (2c) enclosed by the legs (2a, 2b) of the arm (2) is generally vertically positioned when the universal mounting bracket (1) is attached and **in that** the arm (2) and the connecting rack (3) are welded together.

2. Universal mounting bracket according to Claim 1, **characterised in that** the connecting rack (3) has a first hole grid in the mounting position, in particular on the side (3a) facing the chassis frame (7), which hole grid is complementary to a second hole grid found at the intended mounting position, in particular on the chassis frame (7).

3. Universal mounting bracket according to one of the preceding Claims, **characterised in that** a universal hole grid is placed on its arm (2), on one side at least, for the fastening of different vehicle parts.

4. Universal mounting bracket according to one of the preceding Claims, **characterised in that** the arm (2) and/or the connecting rack (3) are made of a bent sheet metal part or a pressed sheet metal part.

5. Universal mounting bracket according to one of the preceding Claims, **characterised in that** the arm (2) is basically vertically extended with respect to one side (3a) of the connecting rack (3), which side (3a) is in contact with the intended attachment point, for example the chassis frame (7).

6. Universal mounting bracket according to one of the preceding Claims, **characterised in that** the connecting rack (3) and the arm (2) form a common level stop face (2c, 3c) on at least one side of the universal mounting bracket.

7. Universal mounting bracket according to Claim 6, **characterised in that** the stop face of the arm (2) is formed by its base (2c).

8. Truck with several universal mounting brackets (1) with features related to one of the preceding Claims for the mounting of different vehicle parts on the chassis frame, whereby the various universal mounting brackets (1) each have at least one arm (2) which takes the form of a half-shell of U-shaped cross-section open to the side, each of the at least one arms (2) having a base (2c) enclosed by the legs (2a, 2b), said base (2c) being basically vertically positioned when the universal mounting bracket (1) is attached.

9. Truck to whose chassis frame different vehicle parts are fastened by means of mounting brackets, whereby the brackets used are universal mounting brackets (1) which have a connecting rack (3) for fastening to the chassis frame (7) and an arm (2) located at said connecting rack (3), to which arm (2) various vehicle parts can be secured, e.g. mudguards, wheel fairings, compressed-air vessels or other operating fluid containers, side panels, lateral underride protection panels, battery boxes, tail lights or other lights, licence plates or nameplates, air filters, pumps, hydraulic, pneumatic or electric components, wheel chocks, spare wheels, etc., **characterised in that** the arm (2) takes the form of a half-shell of U-shaped cross-section open to the side, **in that** the base (2c) enclosed by the legs (2a, 2b) of the arm (2) is, when the universal bracket (1) is attached, aligned basically vertically and **in that** the arm (2) and the connecting rack (3) are welded together.

## Revendications

1. Support universel (1) pour fixer différentes pièces de véhicule sur le cadre du châssis d'un camion poids lourd,
- avec un support d'assemblage (3) pour fixer le support universel (1) à son emplacement prévu, en particulier sur le cadre de châssis (7) d'un camion poids lourd, et
- avec au moins un bras (2) disposé sur le support d'assemblage (3) pour fixer directement ou indirectement au moins une pièce de véhicule (8, 9, 10, 12, 13) dessus, **caractérisé en ce que** le bras (2) est exécuté comme demie coquille ouverte sur le côté et en forme de U en section transversale et le fond (2c) entouré par deux montants (2a, 2b) du bras (2) est orienté pour l'essentiel de manière verticale dans l'état monté du support universel (1), et le bras (2) et le support d'assemblage (3) sont soudés entre eux.

2. Support universel selon revendication 1, **caractérisé en ce que** le support d'assemblage (3) présente sur son côté tourné vers l'emplacement de fixation, en particulier vers le cadre de châssis (7), une première trame de trous qui est formée en complément d'une deuxième trame de trous réalisée au niveau de l'emplacement de fixation prévu, en particulier dans le cadre de châssis (7).

3. Support universel selon l'une des revendications mentionnées précédemment, **caractérisé en ce que** le support universel (1) présente une trame de trous universelle sur son bras (2) au moins sur un côté pour monter différentes pièces de véhicule.

4. Support universel selon l'une des revendications mentionnées précédemment, **caractérisé en ce que** le bras (2) et/ou le support d'assemblage (3) est formé d'une pièce pliée en tôle ou d'une pièce emboutie en tôle.

5. Support universel selon l'une des revendications mentionnées précédemment, **caractérisé en ce que** le bras (2) s'étend pour l'essentiel de manière horizontale par rapport à un côté (3a) s'appuyant sur l'emplacement d'assemblage défini, par exemple le cadre de châssis (7), du support d'assemblage (3).

6. Support universel selon l'une des revendications mentionnées précédemment, **caractérisé en ce que** le support d'assemblage (3) et le bras (2) forment conjointement une surface de butée plane (2c, 3c) sur au moins un côté du support universel (1).

7. Support universel selon la revendication 8, **caractérisé en ce que** la surface de butée du bras (2) est formée par son fond (2c).

8. Camion poids lourd avec plusieurs supports universels (1) dotés des caractéristiques selon l'une des revendications mentionnées précédemment pour fixer les pièces de véhicule les plus diverses sur le cadre de châssis, auquel cas les différents supports universels (1) présentent à chaque fois un bras (2) formé comme demie coquille ouverte sur le côté et en forme de U en section transversale, et un fond (2c) entouré par deux montants (2a, 2b) d'au moins un bras (2) est orienté pour l'essentiel de manière verticale dans l'état monté du support universel (1).

9. Camion poids lourd sur le cadre de châssis duquel sont fixés les pièces de véhicule par le biais de supports, auquel cas le support prévu est un support universel (1) qui présente un support d'assemblage (3) pour fixer des pièces sur le cadre de châssis (7) et un bras (2) disposé sur le support d'assemblage (3), un bras sur lequel sont fixées directement ou indirectement les pièces de véhicule les plus diverses telles que des ailes, des recouvrements de roue, des réservoirs pneumatiques ou réservoirs contenant d'autres ingrédients, des carénages latéraux, des barres anti-encastrement latérales, un coffre à batteries, des feux arrière ou autres feux, des plaques d'immatriculation ou plaques nominatives, un filtre à air, des pompes, des composants hydrauliques, pneumatiques ou électriques, des cales de roue, une roue de secours, etc., **caractérisé en ce que** le bras (2) est exécuté comme demie coquille ouverte sur le côté et en forme de U dans sa section transversale et le fond (2c) entouré par des montants (2a, 2b) du bras (2) est orienté pour l'essentiel de manière verticale dans l'état monté du support universel (1), et le bras (2) et le support d'assemblage (3) sont soudés entre eux.
